# FASCICULE DE BREVET EUROPEEN

(11) **EP 4 069 033 B1**
(45) Date de publication et mention de la délivrance du brevet: **02.09.2026**
(21) Numéro de dépôt: 20708692.7
(22) Date de dépôt: 21.02.2020
(51) Int. Cl.: A46B 11/00, A61C 17/22, A61C 17/26

(54) **BROSSE À DENT MÉCANIQUE ROTATIVE À LA SALVADORA PERSICA ET AUX HUILES ESSENTIELLES**
ROTIERENDE MECHANISCHE ZAHNBÜRSTE MIT SALVADORA PERSICA UND ÄTHERISCHEN ÖLEN
ROTARY MECHANICAL TOOTHBRUSH USING SALVADORA PERSICA AND ESSENTIAL OILS

(30) Priorité: 10.12.2019 MA 47636
(43) Date de publication de la demande: 12.10.2022
(73) Titulaire: Mamdouhe, Karim, 20060 Casablanca (MA); Mellouk, Saoussane, 20060 Casablanca (MA)
(72) Inventeur: Mamdouhe, Karim, 20060 Casablanca (MA); Mellouk, Saoussane, 20060 Casablanca (MA)
(74) Mandataire: Nasr, Abdelmottaleb
(86) Numéro de dépôt international: PCT/MA2020/000002
(87) Numéro de publication internationale: WO 2020/175975

(56) Documents cités:
- WO-A2-2011/109626
- CN-A- 107 550 584
- US-A1- 2008 118 300
- US-A1- 2013 284 626
- US-A1- 2017 280 866
- US-B1- 6 490 747

## Description

La présente invention trouve son utilisation dans le domaine de l'hygiène bucco-dentaire. Il s'agit d'une brosse à dent mécanique de Salvadora Persica rotative et vaporisante d'huiles essentielles, associant ainsi phytothérapie et aromathérapie.

Le document US6490747 divulgue une brosse à dents comprenant un élément de brosse fabriqué à partir d'un morceau de brindille d'un arbre non toxique. Le document US2008/118300 décrit une brosse à dents électrique distributrice de dentifrice. Le document WO2011/109626 divulgue un instrument de soins buccodentaires à distribution de fluide.

Des ouvrages sur l'aromathérapie sont nombreux, l'Homme porte un intérêt de plus en plus croissant aux produits naturels et aux produits issus de l'agriculture biologique. Pour un usage bénéfique et pour respecter le seuil toléré d'utilisation des huiles essentielles ; il est primordial de rester très vigilant face à la richesse et la multitude d'informations et se limiter aux approches scientifiques et se conformer à la posologie recommandée. Les dosages d'huiles essentielles contenues dans les flacons du dispositif sont étudiés pour un usage thérapeutique.

A cet effet, il est proposé un dispositif d'hygiène bucco-dentaire selon les revendications annexées. L'invention représente un outil capable de donner un point de départ à une médecine bucco-dentaire dite douce.

L'invention permet un usage pratique et hygiénique des bâtonnets de Salvadora Persica, connus pour leurs vertus exceptionnelles dans le domaine de la santé et de l'hygiène bucco-dentaire. De nombreuses études ont révélés que les brins de Salvadora Persica regorgent de bienfaits thérapeutiques ; l'invention permet alors de bénéficier de toutes leurs propriétés chimiques (fluor, calcium, phosphore, silice, acide oléique, flavonoïdes, phénols...) et mécaniques (le frottement des brins sur les dents et les gencives est très efficace pour éliminer la plaque dentaire).

L'invention offre ainsi la possibilité d'assurer une excellente hygiène bucco-dentaire par des moyens 100% naturels.

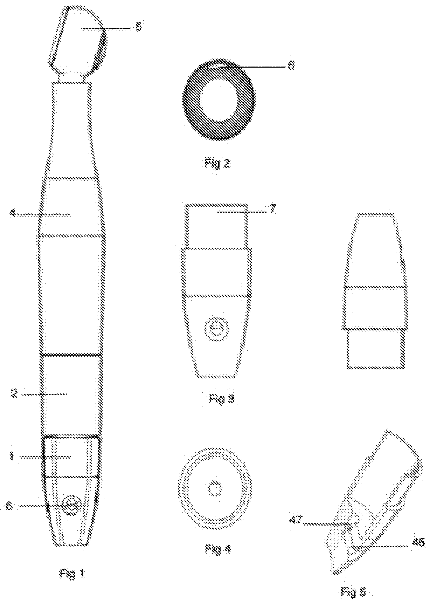

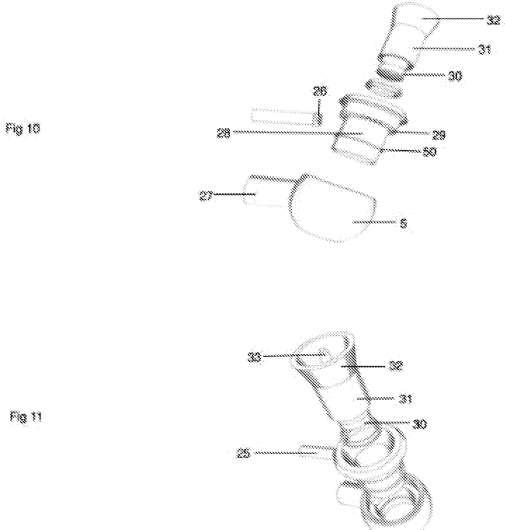

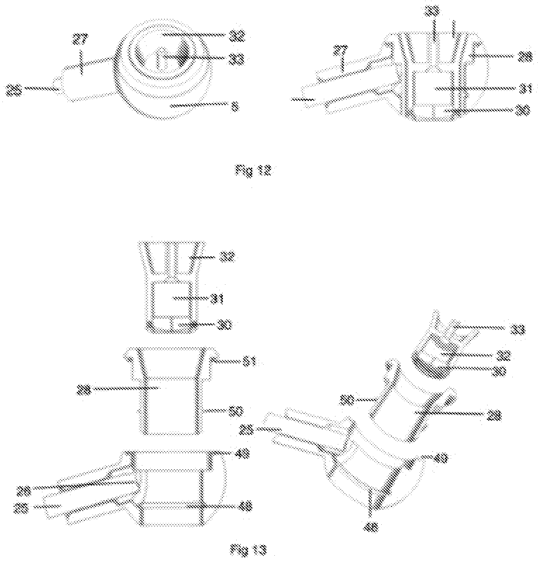

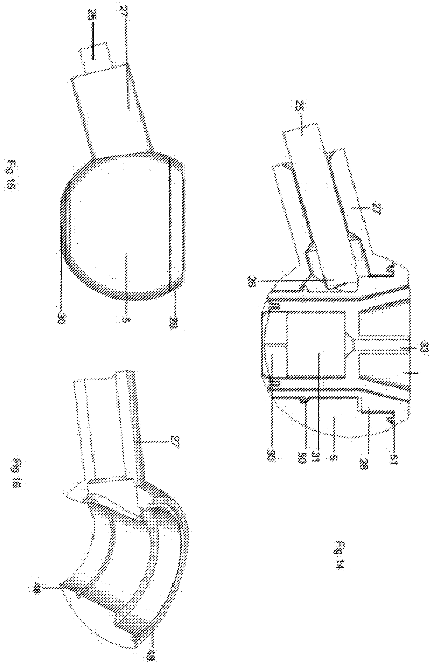

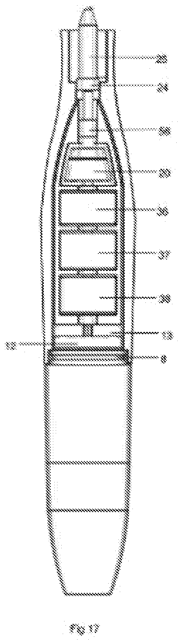

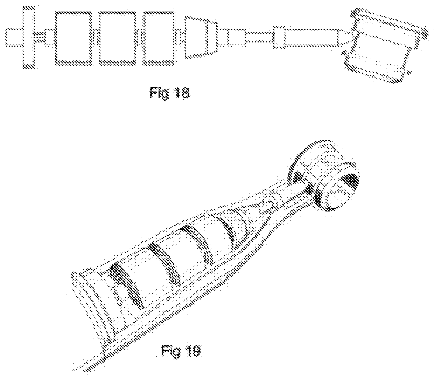

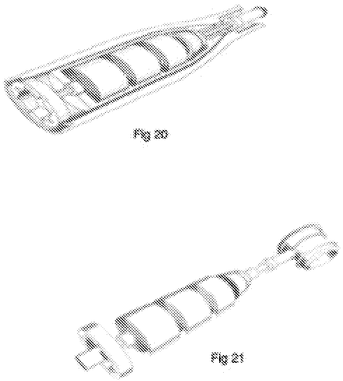

Tel qu'il est illustré par les figures 1-21 annexées, l'Invention concerne une brosse à dent mécanique, rotative, vaporisante, autonome, rechargeable manuellement. Elle permet un brossage optimal sans apport de pâte dentifrice, et sans avoir à rincer la bouche. Sa portabilité lui confère la spécificité d'être utilisée à tout moment de la journée.

Le gel contenu dans le réservoir (31) assouplit les brins de mini bâtonnets de Salvadora Persica ; l'invention résout alors le problème de la dureté des brins de Salvadora Persica.

Le porte mini bâtonnets de Salvadora Persica (30,31,32) est écologique et interchangeable et à usage unique, il est conditionné dans un emballage stérile empêchant ainsi toute contamination entre les brossages.

L'invention permet également la vaporisation dans la cavité buccale, des huiles essentielles à dose thérapeutique contenues dans des flacons vaporisants interchangeables (42) hygiéniques qui sont logés dans le compartiment flacon vaporisant (2). L'huile essentielle est diffusée en pulvérisation par le biais d'une buse brumisante (8) située au niveau du couvercle de base (1).

La tête (5, 27) est constituée d'une coque, d'un raccord (28) et d'un porte mini-bâtonnet de Salvadora Persica (30,31,32). L'ensemble raccord - porte mini-bâtonnet de Salvadora Persica (30,31,32) effectue une rotation continue, à vitesse réduite et à torque atraumatique pendant 2 minutes, comme préconisé par l'organisation mondiale de la santé, offrant ainsi un nettoyage optimal de toutes les surfaces dentaires.

La tête (5, 27) est ergonomique, elle est conçue de telle manière qu'elle facilite l'accès aux faces vestibulaires et linguales des molaires grâce à son inclinaison d'au moins 22,5° par rapport à la verticale.

Ces faces sont en effet difficilement accessibles, et où justement la prévalence de l'atteinte carieuse est des plus importantes dans la cavité buccale.

### Description détaillée de l'Invention :

### Couvercle de base ou Bouchon poussoir (1) : FIG 1, 2, 3, 4, 5, 9

Le couvercle de base (1) ou bouchon poussoir présente à décrire un corps qu'on peut scinder en deux parties :
- Une partie distale (1), qui présente à décrire une buse vaporisante (6) qui met fin à un conduit (45) par lequel arrivent les huiles essentielles, et dont l'origine est un orifice (47) dans lequel va s'emboîter la tige (44) du flacon vaporisant (42). A l'aide d'une pression digitale sur (1), dans le sens couvercle - tête, l'atomiseur (43) du flacon est comprimé diffusant ainsi une dose thérapeutique d'huiles essentielles.
- Une partie mésiale (7) qui présente à décrire une paroi partiellement filetée offrant une liberté au bouchon poussoir, au-delà de la zone de filetage, dans le compartiment flacon vaporisant (2).

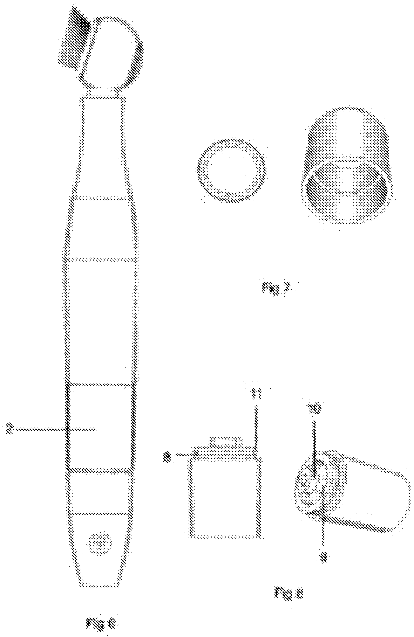

### Compartiment flacon vaporisant ou remontoir (2) : FIG 6, 7, 8, 9

Compartiment où logera le flacon en verre vaporisant (42), contenant les huiles essentielles, il présente à décrire dans son extrémité mésiale une paroi cylindrique (11) dont la face externe présente une tranchée (8) sur tout son périmètre, et où viendront se loger des mini-vis qui vont le solidariser avec le corps du dispositif (4). Ces mini-vis traversent la paroi du corps de la brosse à dent (4) dans son extrémité distale, par un filetage, et viennent se loger librement dans la tranchée (8) du compartiment flacon vaporisant (2), ce qui permet le mouvement de rotation manuel du remontoir (2).

Pour autant la base mésiale du compartiment flacon vaporisant (2) présente à décrire un arbre central (9) dont l'une des extrémités fait corps avec (2) et l'autre extrémité porte une croix de Malte (10) qui empêche le remontoir de tourner en sens Inverse due à la détente des ressorts. Dès que le remontoir (2) charge les ressorts, la rotation s'enclenche une fois la gâchette (41) est mise sur la position « in ».

Pour des raisons de sécurité, le compartiment flacon vaporisant (2) sera fabriqué en cuivre, en titane ou en acier inoxydable de qualité médicale.

### Corps du dispositif (4) FIG 1, 9, 17, 18, 19, 20, 22

Le corps du dispositif (4) présente à décrire une paroi et des zones internes :
- Une zone (52) où va se faire la connexion avec le remontoir (2)
- Une zone (53) qui va loger la croix de Malte (1) et sa couronne anti rotationnelle (12) qui est solidarisée à la face Interne du corps du dispositif (4) par des mini vis,
- Un espace libre (13) qui va permettre le mouvement de va et de vient de la boîte mécanique (18). Sa hauteur correspond à la longueur de la fente (40) prévue pour la gâchette (41) du mécanisme.
- Une zone (54) qui accueillera la boîte mécanique (18)
- Une zone (55) pour la fixation de la tête (5, 27), porte mini bâtonnet de Salvadora Persica (30 31 32).
- Une paroi qui présente à décrire une fente (40) où viendra loger la gâchette du mécanisme (41), cette dernière fait partie de la boîte mécanique et permet de déplacer la boîte mécanique dans un mouvement de va et vient, définissant 2 positions finales :
   ∘ Position « in » : position désolidarisant la boite mécanique du remontoir provoquant ainsi la détente des ressorts et donc le mouvement de rotation de la tête
   ∘ Position « on » permet la connexion de la boîte mécanique (18) au remontoir (2)

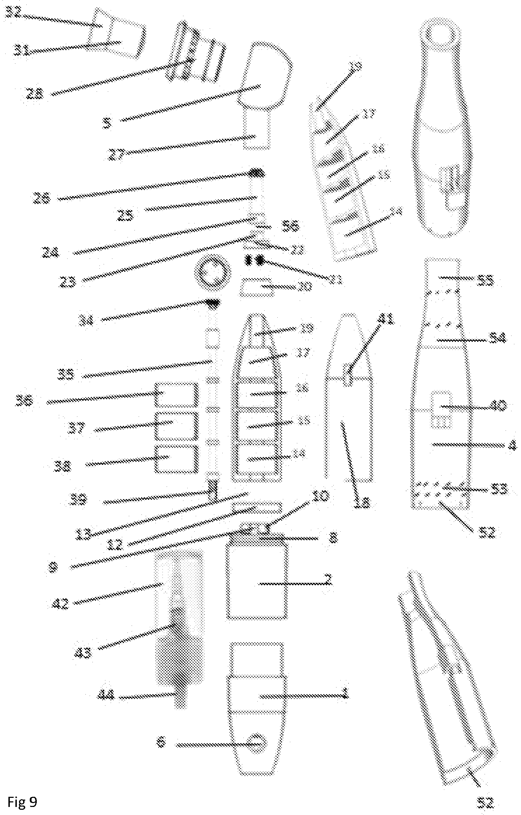

### La boîte mécanique (18) FIG 9, 17, 18, 19, 20, 21

La boîte mécanique (18) forme avec le remontoir (2) et la couronne anti rotationnelle (12) le mécanisme d'accumulation et de transmission d'énergie vers la tête du dispositif. C'est une coque qui présente à décrire des compartiments et une gâchette (41).
- Deux compartiments (14 et 15) prévus pour deux ressorts moteurs (37 et 38)
- Un compartiment (16) prévu pour un ressort moteur (36)
- Un compartiment (17) prévu pour un train épicycloïde réducteur (20.21.22.23)
- Une gâchette (41)

Les ressorts moteurs (36.37.38) sont solidarisés à un arbre central de transmission (35).

Cet arbre central (35) présente 2 extrémités :
- Une extrémité distale (32) de section octogonale émoussée qui vient s'emboîter avec la croix de Malte (10) lorsque la gâchette (41) est sur la position « on »
- Une extrémité mésiale (34) qui se termine par une roue dentée qui va s'engrener avec les satellites (21) du train épicycloïde réducteur (20.21.22.23).

Le train épicycloïde réducteur (20.21.22.23) va adapter la vitesse de rotation et transmettre l'énergie potentielle accumulée dans les ressorts moteurs (36.37.38) vers un arbre (23) dont l'extrémité mésiale (56) est de section octogonale émoussée laquelle vient s'articuler à son tour avec un arbre terminal (24) au niveau de la tête (5, 27) lorsque la gâchette est sur la position « in »

### La tête (5, 27) FIG 9, 10, 11, 12, 13, 14, 15,16

La tête est ergonomique et la surface de brossage est inclinée de 22,5° par rapport à la verticale. La tête où logera le porte mini bâtonnet de Salvadora Persica présente à décrire :
- Un corps de tête (5, 27)
- Un raccord (28)
- Un porte mini bâtonnet de Salvadora Persica avec réservoir.

### Le corps de tête (5, 27) FIG S, 10, 11, 12, 13, 14, 15,16

De forme sphérique (5), prolongé par une tige cylindrique (27), qui permet la solidarisation avec le corps du dispositif, cette tige est également traversée par un arbre terminal (25) dont l'extrémité distale (24) s'articule avec (23) en mode « in », et une extrémité mésiale (26), sous la forme d'une roue cylindroconique dentée qui s'engrène avec sa contrepartie (29) au niveau du raccord (28) formant un engrenage conique.

Le corps de la tête présente également à décrire deux tranchées au niveau de sa partie sphérique :
∘ Tranchée supérieure (49) parallèle à l'axe Y.
∘ Tranchée inférieure (48) parallèle à l'axe Z,

Ces deux tranchées permettent au raccord (28) de se clipper au corps de la tête.

L'axe médian de la sphère fait un angle α= 22,5° avec la verticale influençant ainsi les mesures de l'engrenage conique (26.29)

### Le raccord (28) FIG 9, 10, 11, 12, 13, 14, 15,16

Il permet de transmettre la rotation au porte mini bâtonnet (30.31.32) de Salvadora Persica. Il vient se clipper à l'intrados de la sphère du corps de tête (5). Il présente deux rails (50.51) qui vont guider la rotation dans les tranchées (48.49) décrites dans le corps de tête.

L'anneau denté (29) forme un système d'engrenage conique avec fa roue dentée (26) de l'arbre terminal (25). De l'énergie mécanique est ainsi transmise au porte mini bâtonnet (30.3132) de Salvadora Persica.

La moitié inférieure de l'intrados du raccord (28), fait un angle de 3° (57) par rapport à une verticale, cette mise en dépouille permet l'insertion et la rétention du porte mini bâtonnet de Salvadora Persica.

### Le porte mini bâtonnet de Salvadora Persica et son réservoir, (30.31.32) : FIG 9, 10, 11, 12, 13, 14

Présente à décrire deux compartiments et des parois :
- Compartiment supérieur (32) : à paroi évasée, cet évasement permet l'insertion d'un bois de plus gros diamètre et présente à décrire un conduit central (33) qui communique avec le compartiment inférieur (31) prévu pour contenir un gel visqueux qui va aromatiser et compenser la déshydratation du mini bâtonnet de Salvadora Persica.
- Compartiment inférieur ou réservoir (31) : compartiment cylindrique contenant le gel sus cité, qui sera acheminé le long du conduit central grâce à une pression digitale appliquée sur le piston poussoir (30) situé à la base du compartiment.
- L'extrados du réservoir (31) fait un angle de 3° (58) par rapport à une verticale, angulation qui permet de maintenir en place le porte mini bâtonnet de Salvadora Persica au moment de l'utilisation.

Le porte mini-bâtonnet de Salvadora Persica avec réservoir (30 31 32) effectue un mouvement rotatif continu, à vitesse réduite pendant 2 minutes une fois la gâchette (41) est en position « in ».

## Revendications

1. Brosse à dent mécanique à tête de Salvadora Persica rotative comprenant des mini-bâtonnets de Salvadora Persica et des huiles essentielles et permettant la vaporisation d'huiles essentielles, comprenant :
• Un porte mini-bâtonnet de Salvadora Persica (30, 31, 32) sur la tête ;
• Un manche constitué de 3 parties :
∘ Un couvercle de base ou bouchon poussoir (1) ;
∘ Un corps qui loge un remontoir d'une boîte mécanique;
∘ Un compartiment prévu pour loger un flacon vaporisant d'huiles essentielles, le compartiment faisant office du remontoir de la boîte mécanique (18) ;
ladite tête comprend, en outre, un réservoir destiné à contenir un gel, le porte mini-bâtonnet de Salvadora Persica comprenant un conduit central communiquant avec ledit réservoir.

2. Brosse à dent mécanique selon la revendication 1, **caractérisée en ce que** le couvercle de base fait office de bouchon poussoir avec sa buse.

3. Brosse à dent mécanique selon la revendication 1, **caractérisée en ce que** le compartiment est en cuivre, en titane ou en acier inoxydable de qualité médicale.

4. Brosse à dent mécanique selon la revendication 1, **caractérisée en ce qu'**elle comprend un mécanisme qui permet de transmettre l'énergie potentielle vers la tête porte mini bâtonnet de Salvadora Persica.

5. Brosse à dent mécanique selon la revendication 1, **caractérisée en ce qu'**elle comprend un corps de tête de forme sphérique, traversé par un arbre et présentant des tranchées pour clipser un raccord.

6. Brosse à dent mécanique selon la revendication 1 et 5, **caractérisée en ce qu'**elle comprend une angulation de la partie sphérique du corps de tête de 22,5° par rapport à une verticale perpendiculaire à l'axe horizontal de la brosse à dent mécanique.

7. Brosse à dent mécanique selon les revendications 1, 5 et 6, **caractérisée en ce que** le raccord est un raccord à anneau denté qui va être clipsé au corps de tête, et formant avec l'extrémité de l'arbre terminal traversant le corps de tête un engrenage type conique.

## Patentansprüche

1. Mechanische Zahnbürste mit rotierendem Salvadora-Persica-Kopf, umfassend Mini-Salvadora-Persica-Stäbchen und ätherische Öle und, die das Versprühen von ätherischen Ölen ermöglicht, umfassend:
• Einen Mini-Salvadora-Persica-Stäbchenhalter (30, 31, 32) am Kopf;
• Einen Griff, der aus drei Teilen besteht:
∘ Einen Basisdeckel oder Druckstopfen (1);
∘ Ein Gehäuse, in dem sich ein Aufzug eines Schaltgetriebes befindet;
∘ Ein Fach zur Aufnahme einer Sprühflasche mit ätherischen Ölen, wobei das Fach als Aufzug des Schaltgetriebes (18) dient;
der Kopf ferner ein Reservoir zur Aufnahme eines Gels umfasst, wobei der Mini-Salvadora-Persica-Stäbchenhalter einen zentralen Kanal umfasst, der mit dem Reservoir verbunden ist.

2. Mechanische Zahnbürste nach Anspruch 1, **dadurch gekennzeichnet, dass** der Basisdeckel mit seiner Düse als Druckstopfen dient.

3. Mechanische Zahnbürste nach Anspruch 1, **dadurch gekennzeichnet, dass** das Fach aus Kupfer, Titan oder medizinischem Edelstahl besteht.

4. Mechanische Zahnbürste nach Anspruch 1, **dadurch gekennzeichnet, dass** sie einen Mechanismus umfasst, der es ermöglicht, die potenzielle Energie an den Mini-Salvadora-Persica-Stäbchenhalter zu übertragen.

5. Mechanische Zahnbürste nach Anspruch 1, **dadurch gekennzeichnet, dass** sie einen kugelförmigen Kopfkörper umfasst, der von einer Welle durchzogen ist und Nuten zum Einrasten eines Anschlussstücks aufweist.

6. Mechanische Zahnbürste nach Anspruch 1 und 5, **dadurch gekennzeichnet, dass** sie eine Abwinkelung des kugelförmigen Teils des Kopfkörpers von 22,5° relativ zu einer Senkrechten senkrecht zur horizontalen Achse der mechanischen Zahnbürste umfasst.

7. Mechanische Zahnbürste nach den Ansprüchen 1, 5 und 6, **dadurch gekennzeichnet, dass** das Anschlussstück ein Zahnring-Anschlussstück ist, das am Kopfkörper eingerastet wird, und mit dem Ende der durch den Kopfkörper verlaufenden Endwelle ein Kegelgetriebe bildet.

## Claims

1. A rotary Salvadora Persica head mechanical toothbrush comprising mini Salvadora Persica sticks and essential oils and enabling vaporisation of essential oils, comprising:
• A Salvadora Persica mini-stick holder (30, 31, 32) on the head;
• A handle consisting of 3 parts:
∘ A base cover or push plug (1);
∘ A body which houses a winding member of a mechanical housing;
∘ A compartment designed to house an essential oil spray bottle, the compartment serving as the winding member of the mechanical housing (18);
said head further comprises a reservoir for containing a gel, the Salvadora Persica mini-stick holder comprising a central conduit communicating with said reservoir.

2. The mechanical toothbrush according to claim 1, **characterised in that** the base cover acts as a push plug with its nozzle.

3. The mechanical toothbrush according to claim 1, **characterised in that** the compartment is of copper, titanium or medical grade stainless steel.

4. The mechanical toothbrush according to claim 1, **characterised in that** it comprises a mechanism for transmitting potential energy to the Salvadora Persica mini-stick holder head.

5. The mechanical toothbrush according to claim 1, **characterised in that** it comprises a spherically shaped head body, through which a shaft passes and having trenches for clipping a fitting.

6. The mechanical toothbrush according to claims 1 and 5, **characterised in that** it comprises an angulation of the spherical portion of the head body of 22.5° relative to a vertical perpendicular to the horizontal axis of the mechanical toothbrush.

7. The mechanical toothbrush according to claims 1, 5 and 6, **characterised in that** the fitting is a toothed ring fitting that will be clipped to the head body, and forming a bevel type gear with the end of the terminal shaft passing through the head body.
